# EUROPEAN PATENT SPECIFICATION

(11) **EP 0 326 186 B1**
(45) Date of publication and mention of the grant of the patent: **25.10.1995**
(21) Application number: 89104136.0
(22) Date of filing: 10.04.1984
(51) Int. Cl.: G02B 5/128

(54) **High-angularity retroreflective sheeting and method for manufacture**
Weitwinklig retroreflektierende Folie und Verfahren zu ihrer Herstellung
Feuille rétroréflectrice à grand angle et méthode de sa fabrication

(30) Priority: 11.04.1983 US 483604
(43) Date of publication of application: 02.08.1989
(62) Divisional of application: 84302442.3
(73) Proprietor: MINNESOTA MINING AND MANUFACTURING COMPANY, St. Paul, Minnesota 55133-3427 (US)
(72) Inventor: Bailey, Terry R. c/o Minnesota Mining and, P.O. Box 33427 St. Paul Minnesota 55133 (US)
(74) Representative: Baillie, Iain Cameron

(56) References cited:
- US-A- 3 551 025
- US-A- 3 702 213
- US-A- 3 795 435
- US-A- 4 377 988

## Description

### Technical Field

The present invention provides a new embedded-lens retroreflective sheeting which exhibits superior properties, including superior angularity, and which is made by a new method of manufacture involving lamination techniques.

### Background Art

The most widely used form of retroreflective sheeting is the "enclosed-lens" or "embedded-lens" form originally taught in U.S. Pat. 2,407,680. Such sheeting includes a transparent polymeric sheet, a monolayer of microspheres embedded within the sheet, and a specularly reflective layer underlying the back surface of the polymeric sheet. To achieve maximum reflection from such a sheeting, the distance between the microspheres and the specularly reflective layer must be closely controlled to place the latter at the approximate location where light rays are focused by the microspheres. The conventional approach to providing such a controlled spacing is to coat the microspheres with a polymeric layer, known as the spacing layer, prior to application of the specularly reflective layer.

A problem with this conventional coating approach is that the coated layer is generally at an optimum thickness only in a small area directly in back of individual microspheres. The coated material tends to flow into the areas between the microspheres, giving those areas an enlarged thickness and spacing the specularly reflective layer away from the focal point of the microspheres. Incident light that is perpendicular to the sheeting, or only slightly displaced from perpendicular, is brightly reflected since it is focused onto the small areas of optinum spacing in back of individual microspheres. But light impinging on the sheeting at an angle substantially displaced from perpendicular is focused to a point in front of the specularly reflective layer, and retroreflection at those angles is reduced.

Despite the recognized disadvantage of this limited "angularity" of conventional embedded-lens retroreflective sheeting, no significant improvement in the angularity of commercial embedded-lens sheeting has been obtained for many years. The sheeting continues to have half-brightness angles (the angle at which light incident on the sheeting is reflected at half the brightness that light perpendicular to the sheeting would be reflected) of about 30° to 45°. Such an angularity is adequate for many purposes, but not for other potentially important uses such as signing on the sides of trucks or other vehicles. Motorists often view a sign on the side of a truck from a position other than perpendicular to the truck, at large incidence angles far beyond the angles at which existing embedded-lens reflective sheetings are reflective.

U.S. 4,367,920 discloses retroreflective sheeting comprising first and second transparent polymeric layers; a monolayer of transparent microspheres embedded in the first layer to on the average less than half their diameter, said microspheres having different diameters, and being embedded to more than one tenth of their diameter, with the second transparent polymeric layer being laminated in substantially full contact to the microsphere-covered surface of the first layer, whereby it is in contact with, and follows the curved surfaces of, the microspheres protruding from the first layer between the microspheres; and a specularly reflective layer coated on the exposed configured surface of the second layer.

U.S. 4,367,920 also discloses a method for making retoreflective sheeting comprising forming first and second transparent polymeric layers embedding a monolayer of microspheres in the first layer under heat and pressure to a depth of on the average less than one-half their diameter, the microspheres having different diameters, and being embedded to more than one-tenth their diameter, the second layer being laminated in substantially full contact with the microsphere-covered surface of the first layer so that the first layer is in direct contact with, and follows the curved surfaces of, the portions of the microspheres protruding from the first layer, and also is in direct contact with the portions of the first layer between the microspheres; and coating the exposed configured surface of the second layer with a specularly reflective layer.

### Disclosure of the invention

EP-A-125,038 (corresponding to EP 84302442 from which the present application is divided) discloses and claims such retroreflective sheeting in which the portions of the surfaces of said microspheres facing outwardly from said first layer lie substantially in a common plane. EP-A-125,038 also discloses and claims a method for the manufacture of such retroreflective sheeting.

The present invention provides elastomeric, embedded-lens retroreflective sheeting capable of being repeatedly stretched and relaxed while maintaining useful retroreflective properties comprising
a) a monolayer of transparent non-stretchable microspheres;
b) a sheet in which the microspheres are embedded comprising
   i) a transparent polymeric spacing layer underlying the back surface of the microspheres and having a back surface that is spaced from the back surface of the microspheres, and is conformed to follow the curved surfaces of the microspheres; and
   ii) a transparent polymeric cover layer covering the front surface of the microspheres; and
c) a specularly reflective layer coated on said conformed back surface of the spacing layer;

said transparent polymeric layers comprising elastomeric materials which allow the sheeting to be repeatedly stretched to at least 125% of its original dimensions and upon release of the stretching tension to rapidly return to substantially its original dimensions so as to reflect incident light.

Preferably, according to the present invention, the microspheres are embedded into the first layer to depths that leave the extreme edges of the non-embedded portions of the microspheres in substantial alignment the microspheres are applied in lower numbers per unit area than might otherwise be obtained, and the microspheres are used in a broader range of diameters than generally regarded as optimal in the past, all to obtain further improvements in angularity. Also, the lamination is preferably achieved by use of a cushioning web comprising a polymeric material which engages the second polymeric layer and which softens during the lamination step to a softer or lower viscosity condition than the second polymeric layer.

It has been found that sheeting prepared in the manner described has an angularity never before achieved in an embedded-lens retroreflective sheeting. For example, the half-brightness angle for sheeting of the invention is generally 50° or more, and preferably 60° or more, on at least one axis of the sheeting, in contrast to the conventional half-brightness angle of about 30° to 45° noted above. Also, the new sheeting is reflective to very high incidence angles approaching 90°, whereas conventional embedded-lens sheetings have little if any reflection at angles of incidence greater than about 65°.

While not restricting ourselves to a particular mechanism or theory, it is believed that the superior angularity of the new sheeting can be attributed at least in part to the fact that in such sheeting the spacing layer conforms in a substantially constant thickness around a large portion of the back surface of the microspheres. Because of the shallow embedding of the microspheres in the first layer, there is a large unfilled space between the microspheres, which can accommodate excess portions of the spacing layer during lamination of the spacing layer to the microspheres, and thus avoid an accumulation of the material of the spacing layer that would otherwise thicken the spacing layer over portions of the back surface of the microspheres. Also, alignment of the back surfaces of the microspheres allows the spacing layer to be applied more uniformly to individual microspheres irrespective of the sizes of the microspheres. Control over the density per unit area of the microspheres further enhances conformation of the spacing layer, as does use of a softenable cushioning web during the lamination operation.

### Additional Prior Art

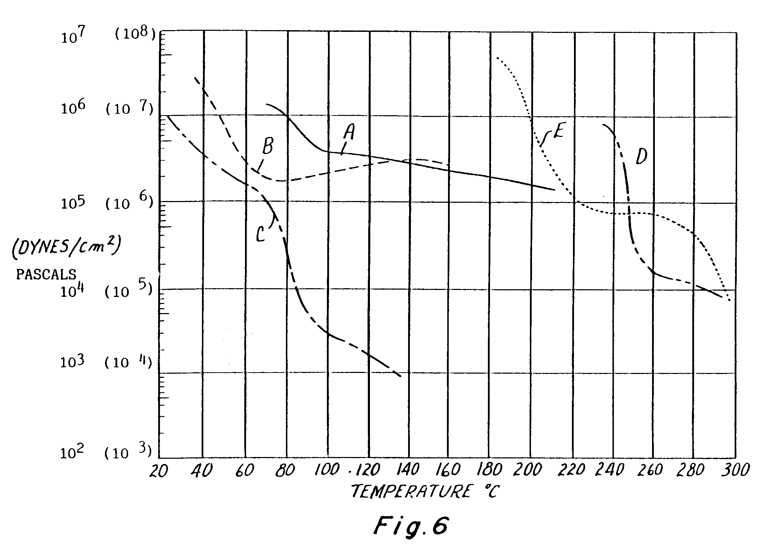

Previous workers besides those of U.S. Pat. 4,367,920 have used a preformed spacing film in embedded-lens retroreflective sheeting. However, in one approach taught in U.S. Pat. 3,795,435 the preformed spacing film carries a layer of adhesive, into which glass beads or microspheres are initially embedded and supported, and during conformation of the film around the microspheres the adhesive is forced between the microspheres. The adhesive occupies the space between the microspheres, so that as pictured in the drawings of the patent, the microspheres appear to be embedded to over 60 percent of their diameter in the adhesive layer and added top layers (the layers 12, 14 and 15 in Figure 6 of U.S. Pat. 3,795,435). Less than about 40 percent of the diameter of the microspheres is left for the spacing film to be conformed around. The result is that there is inadequate space between the microspheres to accommodate the spacing film, and the sheeting cannot exhibit the high angularity exhibited by sheeting of the invention.

In addition, although the drawings of the patent do not indicate this fact, it would appear difficult to fully displace the adhesive on the spacing film into which the glass beads or microspheres are initially embedded from in back of the microspheres during deformation of the spacing film around the microspheres. To the extent that the adhesive is not displaced, the space between the microspheres and a specularly reflective layer coated on the spacing film will be unduly large, and the specularly reflective layer will not be fully aligned at the focal points of the microspheres for light impinging on the sheeting at higher incidence angles.

The patent also contemplates in column 8, lines 8-24 the use of a preformed cover foil. The glass beads are said to be first positioned on the cover foil after which the preformed spacing film is coated with "adhesive in suitable thickness," and deformed around the glass beads. As the patent states, the extent of deformation of the spacing film "is largely dependent on the thickness of the adhesive layer and the pressure of the rollers or the like," but no suggestion is made that a construction different from that pictured in the drawings would be obtained.

Additional proposals for laminating a preformed spacing film into retroreflective sheeting are described in U.S. Pats. 4,023,889; 4,104,102; and 4,226,658. In all of these proposals glass microspheres are first partially embedded into a two-layer top film (in a manner described in U.S. Pat. 4,023,889), after which the spacing film is laminated over the protruding microspheres. As shown in Figure 9 of U.S. Pat. 4,023,889, the microspheres are deeply embedded into the top film, to a depth of over 50 percent of their average diameter, with the result that the spacing film has little penetration between the microspheres, as evidenced in Figure 9 of U.S. Pat. 4,023,889. Penetration is also limited by the fact that the spacing film is metallized prior to lamination, which stiffens it; and in U.S. Pat. 4,226,658 the spacing film is carried on a paper carrier, which limits the extent to which the spacing film can be deformed. Also, the microspheres are pressed through the bottom of the two layers of the top film into contact with the top layer, which results in alignment of the front surfaces of the microspheres, rather than alignment of the back surfaces as in preferred sheeting of the invention.

### Brief Description of the Drawings

Figures 1, 2 and 5 are schematic diagrams of apparatus for preparing sheeting of the invention (Figures 1A, 2A and 2B are enlarged sectional views of sheeting being processed on the apparatus shown in Figures 1 and 2, respectively);
Figure 3 is a sectional view of a representative sheeting of the invention;
Figure 4 is a sectional view through a representative prior art retroreflective sheeting;
Figure 6 is a set of graphs of loss modulus in dynes per square centimeter versus temperature in degrees centigrade for a variety of polymeric materials showing a property useful in achieving retroreflective sheeting of the invention; and
Figure 7 is a set of graphs of retroreflective brightness in candelas per lumen of incident light versus the angle of incidence of the light for exemplary sheetings of the invention and a representative prior-art sheeting.

### Detailed Description

The invention will be further described by the following examples which refer to the attached drawings.

### Example 1

An ionically crosslinked copolymer of ethylene and methacrylic acid having a melt index of 0.6 and stabilized to ultraviolet light (Surlyn 1706 UV03 supplied by duPont) was extruded through a thin slot onto a 2-mil (1mil = 25,4 nm) -thick (50 micrometers thick) polyethylene terephthlate (PET) carrier film using standard film extrusion conditions. The extruder, slot thickness and speed of the PET carrier film were adjusted to achieve a thickness for the extruded layer of 2 mils (50 micrometers).

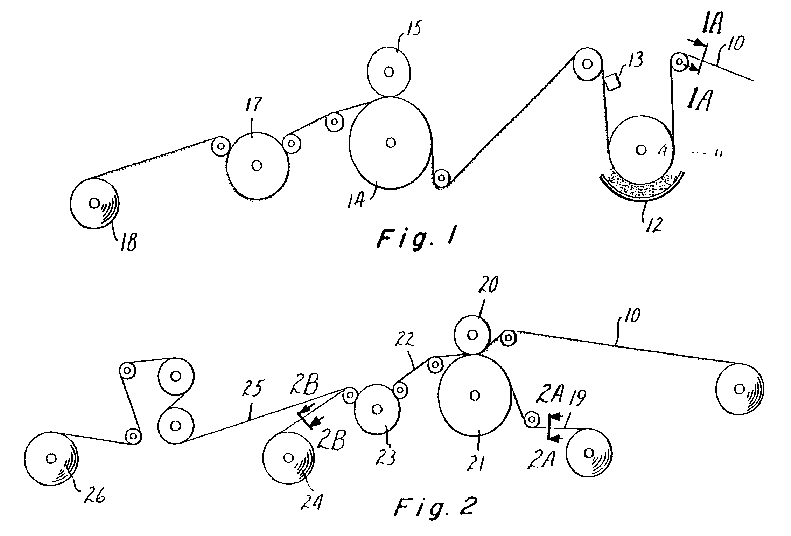

Microspheres were embedded into the extruded layer of described composite film using apparatus as shown in Figure 1. The composite film is identified as 10 in Figure 1, with the extruded layer of the composite film shown as 10a and the PET carrier film as 10b. The composite film 10 was pulled around a roller 11, which was heated to (240°F) 115.5°C with the PET layer 10b against the heated roller and the extruded layer 10a facing away from the roller. A pan 12 containing glass microspheres having an average diameter of 56 micrometers, a range in size of about 20 micrometers, and an index of refraction of 2.26 was positioned so that the microspheres formed a packed bed around the heated roller 11. As the composite film passed around the roller, the extruded layer 10a became slightly tacky and a monolayer of the microspheres became adhered to the layer. After leaving the roller, the composite film was vibrated slightly with a vibrator 13 to remove any excess microspheres, and then continued to a second roller 14, which was heated to (320°F) 160.0°C.

The microsphere-coated side of the film traveled against the roller 14, and after traveling about 18 inches around the roller, the film engaged a silicone rubber nip roller 15, which was heated to (220°F) 104.4°C at the exit of the heated roll 14 and nip roll 15, the microspheres were found to have been pushed into the extruded layer 10a to about 20-40 percent of their diameter, and the nonembedded surfaces of the microspheres were substantially aligned in a common plane. The film 10, thus covered with microspheres, passed around a cooling roller 17 and then was wound up in a roll 18 before storage for further processing (alternatively the further processing can be performed in line with the apparatus shown in Figure 1).

A cushioning web was prepared from a polyester resin (Vitel PE307 resin available from Goodyear Chemical Company and thought to be the reaction product of ethylene glycol, neopentyl glycol, sebacic acid, isophthalic acid and terephthalic acid). This resin was dissolved in a 50/50 mixture of methylethylketone and toluol to prepare a 40-weight-percent-solids solution, the solution coated onto a 2-mil-thick (50 micrometers) PET film, and the coated solution dried completely. The dry coating was 1 mil (25 micrometers) thick. To further avoid use of solvent, the polyester could also be extruded instead of solvent-coated.

This cushioning web was then extrusion-coated with a layer adapted to serve as the spacing layer or film in the ultimate retroreflection sheeting. The layer was formed from another ionically crosslinked copolymer of ethylene and methacrylic acid having a melt index of 14 (Surlyn 1702) and was extruded through a slot onto the dry surface of the coated polyester resin on the cushioning web. The extrusion conditions were adjusted to yield a 0.75-mil-thick (about 20 micrometers thick) extruded layer.

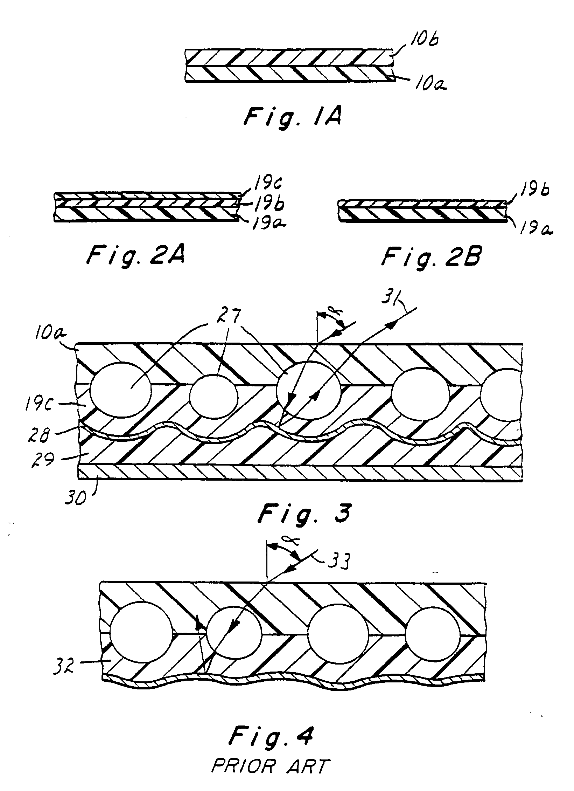

The cushioning web with extruded spacing layer was then laminated onto the previously prepared microsphere-covered film 10 using apparatus as shown in Figure 2. The microsphere-covered film 10 and the spacing-layer-covered cushioning web 19 (comprising the PET film 19a, the coated polyester resin 19b, and the spacing layer 19c of ionic copolymer) were pressed together between a nip roller 20 and a heated roller 21. The roller 21 was heated to (280°F) 137.8°C and at that temperature, the ionically cross-linked copolymer in the layer 10a has a higher melt viscosity than the ionically crosslinked copolymer in the layer 19c, and the latter has a higher melt viscosity than the polyester resin in the layer 19b. These differences in melt viscosity led to the following changes within the assembly during the application of pressure between the heated roll and nip roll: the microspheres tended to remain at their original level in the layer 10a of higher-melt-viscosity copolymer; the spacing layer 19c of lower-melt-viscosity copolymer was softened and forced around the portions of the microspheres protruding out of the layer 10a, and was conformed to follow the curved surfaces of the microspheres; and the polyester resin layer 19b deformed and flowed to allow the described conforming of the layer 19c.

After passage past the heated roll 20 and nip roll 21, the microsphere-covered film 10 and spacing-layer-covered cushioning web 19 were united as an assembly 22, which was then cooled by passage around a cooling roller 23. Thereupon the cushioning web (layers 19a and 19b) was stripped away and wound in a roll 24. The remaining product 25, comprising the polyester carrier film 10b and the laminated layers 10a and 19c, with microspheres embedded between the layers, was then wound in a storage roll 26 as shown; alternatively the film could have moved directly to stations which completed the retroreflective sheeting.

The product 25 was subsequently unwound from the storage roll and aluminum was vapor-deposited onto the conformed surface of the layer 19c to form a specularly reflective layer. The polyester carrier film 10b was then removed and an acrylate-based pressure-sensitive adhesive layer coated on a silicone-coated release liner was laminated to the vapor-coated surface to form a completed retroreflective sheeting like that shown in solid lines in Figure 3. This complete product comprised the layer 10a of higher melt viscosity copolymer, serving as a top film; the glass microspheres 27; the conformed layer 19c of lower melt viscosity copolymer, serving as a spacing film or layer; the layer 28 of vapor-deposited aluminum; the layer 29 of pressure-sensitive adhesive; and the release liner 30.

The retroreflectivity of the completed sheeting was then measured with a retroluminometer as described in United States Defensive Publication T987,003. This instrument projects a one-inch-diameter circle of light onto a sample of the sheeting and measures the light returned at a selected divergence angle. At the small incidence angle of 4° (instead of 0° to eliminate specular reflection from the face of the sheeting) and 0.2° divergence angle, the retroreflectivity of the completed sheeting was found to be 100 candelas per lumen. The retroluminometer was then swung away from the perpendicular with the same light beam continuing to be projected on the sample. The angle at which the sheeting had half the brightness (50 candelas per lumen) was found to be 52° when measured downweb and 65° when measured crossweb. Also, some samples of sheeting of the example remained visibly reflective at 85° in the cross-web direction.

The excellent angularity represented by the measurements of retroreflectivity reported in the previous paragraph contrasts sharply with the angularity exhibited by conventional commercial retroreflective sheetings, which have half-brightness angles of about 30° to 45° and become essentially non-reflective at incidence angles of about 65°. Figures 3 and 4 illustrate a basis that is understood to at least partially explain the measured superiority in angularity. As shown in Figure 3, a light ray 31, which is incident on the sheeting at a high incidence angle alpha (α), is transmitted through a microsphere 27 and spacing layer 19c into engagement with the specularly reflective layer 28, which penetrates deeply between the microspheres and conforms well to the shape of the microspheres behind which it is disposed. The light ray 31 is reflected by the specularly reflective layer 28 back toward the source of the light. By contrast, in conventional retroreflective sheeting, such as shown in Figure 4, the spacing layer 32 is not conformed as fully around the microsphere, and the specularly reflective layer does not conform as concentrically around the microspheres, as in sheeting of the invention. The result is that a light ray 33, which strikes the prior art sheeting at the incidence angle alpha (α) is not reflected by the specularly reflective layer back towards the source of the light, but instead is scattered within the sheeting or to some point outside the sheeting.

It may be noted that measurements of angularity should be measured on sheeting, or at a point on sheeting, where the reflected light is white and does not have a significant blue or yellow shade to it. Reflection from a retroreflective sheeting can be adversely or beneficially affected if the spacing layer is thicker or thinner than optimum, which is manifested by a blue or yellow shade to the reflected light. Most accurate results are obtained when the reflected light is white.

### Example 2

Example 1 was repeated except that a) the high-melt-viscosity ionic copolymer of the layer 10a in which the microspheres were partially embedded was replaced with a thermoplastic aliphatic polyurethane resin having a melt index of 17.2 ("Q-thane" PNO3-93E supplied by K. J. Quinn); b) the roller 14 in Figure 1 was heated to(250°F) 121.1°C c) the cushioning web was a commercially available web comprising a polyethylene-coated paper in which the polyethylene had a melt index of about 10 and the polyethylene coating was about 1 mil thick; d) the low-melt-viscosity ionic copolymer in the spacing layer 19c was replaced by a thermoplastic aliphatic polyurethane polyurethane resin having a melt index of 2.6 ("Q-thane" P342-9L supplied by K. J. Quinn); and e) the heated roll 21 in Figure 2 used to laminate the microsphere-covered web 10 and spacing-layer-covered cushioning web 19 was heated to (320°F) 160.0°C (melt index was measured by the procedure of ASTM D1238 using condition (e) for polyethylene and using a temperature of 175°C and load of 5000 grams for the polyurethane resins).

The retroreflectivity of the completed reflective sheeting was about 110 candelas per lumen of incident light at an incidence angle of 5°, and the sheeting exhibited half-brightness angles of 47° downweb and 55° crossweb.

Sheeting of this example exhibited novel stretchability for retroreflective sheeting. For example, when stretched ten times to 125 percent of its original dimensions, with a ten second relaxation between stretches, and then measured as to reflective brightness five minutes after stretching was completed, the sheeting retained 91 percent of its original reflective brightness.

### Example 3

Example 1 was repeated except that the composite film 10 was replaced with a composite film that comprised a UV-stabilized 1-mil-thick PET film (using a stabilizer as described in U.S. Pat. 3,580,927, which had been primed in the manner described in U.S. Pat. 3,188,266) and a 1-mil-thick layer of ionically crosslinked copolymer of ethylene and methacrylic acid having a melt index of 5 (Surlyn 1652 SR). Microspheres were partially embedded in the copolymer film, and the whole two-layer composite film was included in the finished complete reflective sheeting, rather than stripping away the PET film. The roll 14 in Figure 1 was heated to (280°F ) 137.8°C. The completed reflective sheeting had a reflectivity of about 90 candelas per lumen at an incidence angle of -4° as measured in the manner described above and half-brightness angles of 55° downweb and 65° crossweb.

### Example 4

Example 1 was repeated except that no cushioning web was used, and lamination of the spacing layer to the microsphere-covered layer was accomplished by vacuum-forming techniques. The lower-melt-viscosity ionic copolymer (Surlyn 1702) was used for the spacing layer but the copolymer was coated onto a 2-mil-thick (50-micrometer-thick) PET film rather than onto the cushioning web. The microsphere-covered film 10 described in Example 1 was laid onto a vacuum plate, with the microspheres facing away from the vacuum plate. The PET carrier film was stripped away from the lower-melt-viscosity ionic copolymer, leaving the latter as a free film which was then laid onto the microsphere-covered film. The free copolymer film was greater in length and width than the microsphere-covered film 10 and the vacuum plate and was arranged to cover the entire vacuum plate and microsphere-covered film. A vacuum was drawn, which pulled the free copolymer film down toward the vacuum plate and against the microspheres. The assembly was heated with a heat gun, which softened the free copolymer film and allowed the vacuum to complete shaping of the film closely around the protruding portions of the microspheres and to achieve bonding of the film to the microspheres and to the portions of the film 10 between the microspheres.

As the above examples illustrate, the top film and spacing film in retroreflective sheeting of the invention may be formed from a variety of polymeric materials. In general, these polymeric materials have a soft stage, as typified by the thermosoftening of partially amorphous or semicrystalline thermoplastic polymers, during which microspheres can be embedded in the films and the films laminated together. The amorphous character of the polymers is indicated by the fact that, rather than having a sharp melting point and large changes in melt viscosity as the temperature rises through the melting point, they melt or soften over a rather broad temperature range, and have only moderate or gradual changes in melt viscosity as the temperature rises through the melting range.

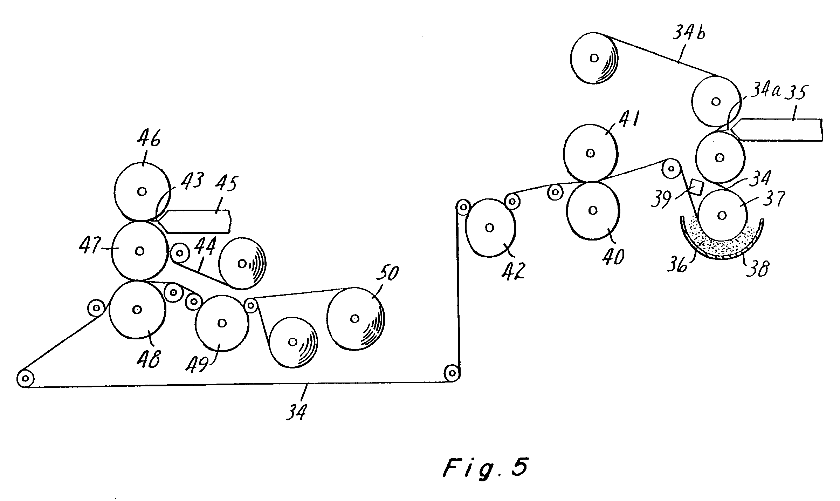

This characteristic is illustrated in Figure 6, where the loss modulus of representative polymeric materials is plotted versus temperature. The loss modulus was measured on a Rheometrics Mechanical Spectrometer where a 25-millimeter-diameter disk-shaped specimen of the material about 2 millimeters thick is mounted between a torque transducer on one side and a rotary driving or oscillating mechanism on the other side. The specimen is then subjected to an initial strain of 1-2 percent at a frequency of 10 Hertz at increasing temperature. The magnitude of rotation measured by the torque transducer which is out of phase with the driving mechanism is a measure of the viscosity of the material being tested and is reported in Pascals (dynes/square centimeter) on the ordinate of the graph. Curves A and B in Figure 5 show the loss modulus measured for the material of 10a in, respectively, Example 1 (i.e., Surlyn 1706) and Example 2 (i.e., Q-thane PN03-93E). Curves C, D and E show the loss modulus measured for ethylene vinyl acetate, cellulose acetate, and polyethylene terephthalate.

Best results in practice of this invention are obtained with materials having properties as represented in Curves A and B where there is a plateau or gradual change in viscosity over a longer temperature interval, such as 50° or 75°C or more, in the softening range of the material. For example, upon reaching a loss modulus of about(10⁶ dynes per square centimeter), 105 Pascals subsequent heating of the material of Curves A and B through such a temperature interval causes the loss modulus to change by less than an order of magnitude. Such a broad softening range and moderate or gradual change in melt viscosity eases processing, and allows a controlled introduction of microspheres to desired depths in the top film. Because of the broad softening range, some pressure is required to force the microspheres into the film, whereby the unembedded edges of the microspheres tend to be aligned at a common level, i.e., at the surface of a tool, such as a pressure roller, that engages the microspheres and applies the pressure. A broad softening range also allows a controlled shaping of the spacing film in a substantially constant thickness over the protruding or unembedded edges of the microspheres.

The polymeric material of the cushioning web should soften to a lower viscosity, i.e., should have a lower loss modulus, than the second polymeric layer during the lamination operation. For example, the polyester resin used in the cushioning web of Example 1 exhibits a loss modulus at the lamination temperature of 280°F (about 140°C) of about (6 x 10⁵ dynes per square centimeter) 6 x 10⁴ Pascals while polyethylene as used in the cushioning web of Example 2 exhibits a loss modulus at the lamination temperature of 320°F (about 160°C) was(2.6 x 10⁵ dynes per square centimeter)2.6 x 10⁴ Pascals.

In completed sheeting of the invention, polymeric films should not appreciably soften at temperatures lower than about 200°F (100°C), to maintain needed dimensional stability for the product during expected conditions of use. However, when polyester carrier webs are used in manufacture of sheeting of the invention, the polymeric materials should soften at temperatures less than about 400°F (200°C), when polyester loses its dimensional stability.

The materials of the top and spacing films or layers should be compatible with one another and adapted to form a good bond together, and/or to the microspheres. The needed bond adhesion can be tested by laminating films of the materials together, or to a plate of the material from which the microspheres are made. Preferably the adhesion between the components is greater than the tensile strength of the materials.

Also, the material of the spacing film preferably can be coated with metal in a vacuum deposition process. For example, the polymer should not give off molecules in a vacuum at a rate that impedes deposition of metal so as to form a smooth adhered metal film.

Acrylics, aliphatic urethanes, and polyesters are particularly useful polymeric materials because of their outdoor stability. In addition, weathering stabilizers are generally included in the polymeric films, such as ultraviolet light absorbers, antioxidants, and materials that scavenge or inhibit the action of chemical radicals within the films. Ionomers, (i.e., ionically crosslinked polymers such as the copolymers used in the examples, particularly copolymers of ethylene and an acrylic or methacrylic acid), vinyls, fluoropolymers, polyethylenes, cellulose acetate butyrate, polycarbonates, and polyarylates are other examples of polymers that may be used in sheeting of the invention. In some uses deficiencies in a particular polymer are overcome by use of a multilayered film, whereby, for example, a polymer that softens over a short temperature interval is still useful as a layer in which to pressure-embed microspheres, because the microspheres sink only to the level of a support film in which the softenable layer is carried.

It is preferred to apply a specularly reflective layer to the spacing film or layer after the film has been laminated into the sheeting product and conformed to the microspheres. The specularly reflective layer can also be applied to the spacing film prior to the lamination step, but in that event tends to crack during the lamination and conformation step, whereupon reflective brightness is reduced. Also, the specularly reflective layer is somewhat stiff and can reduce conformation of the spacing film to the microspheres and cause it to wrinkle rather than smoothly conform.

Various other layers can be included in sheeting of the invention in addition to those discussed. For example, one or more layers may be added to the top film to improve weathering resistance (e.g., by use of an acrylic layer), or to provide added hardness (e.g., by use of an epoxy-terminaed silane layer), or to improve cleanability (e.g., by use of a polytetrafluoroethylene layer).

Adhesive or other layers are generally applied over the specularly reflective layer to complete the sheeting. Such layers protect the specularly reflective layer and also usually serve a functional purpose such as adhering the sheeting to a substrate. Conventional pressure-sensitive adhesives such as acrylate-based adhesives, or heat- or solvent-activated adhesives are typically used, and may be applied by conventional procedures, e.g., by laminating a preformed layer of adhesive on a carrier web or release liner to the specularly reflective layer.

The index of refraction and average diameter of the microspheres and the index of refraction of the material of the top layer and spacing layer dictate the thickness of the spacing film. The index is generally in the range of 2.0 to 2.5, and more typically about 2.2 to 2.3, in which case the thickness of the spacing film behind the microspheres should be about one-quarter of the average microsphere diameter. The microspheres can range from at least 40 to 120 micrometers in average diameter, but preferably they are between about 50 and 90 micrometers in average diameter. The microspheres can be treated, e.g., with an adhesion-promoting agent such as an aminosilane, to improve the bond of the microspheres to the polymeric films.

The microspheres vary statistically in size, which is of value because it allows greater latitude in the thickness that the spacing film or layer must exhibit in the completed sheeting. Some microspheres within a broad range of microsphere diameters, i.e., a range of diameters equal to about 50 percent or more of the average diameter of the microspheres, will be in appropriate size relationship with the spacing film, even if the spacing film varies from its intended thickness because of imprecision during extrusion or lamination. With a broad variation in microsphere diameters, it is especially helpful for the extreme edges of the microspheres protruding from the top film to be in alignment, because the film can then more easily contact all sizes of beads, small or large, and can be more easily pressed around all these sizes.

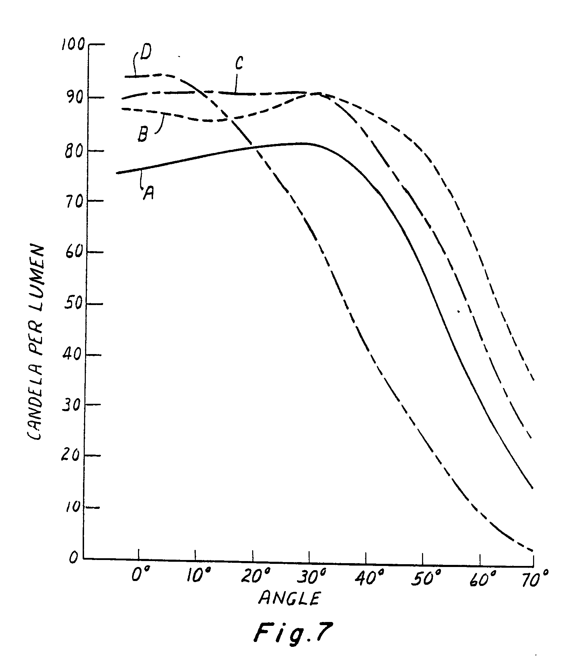

Figure 7 illustrates some of the results that have been obtained. Curve A plots retroreflective brightness in candelas per lumen of incident light versus the angle of incidence of the light measured in the downweb direction for sheeting of the invention made by the method and from the materials described in Example 1; Curve B shows the results measured crossweb on similar sheeting made using more broadly classified microspheres, namely microspheres averaging 73 micrometers in diameter and varying in diameter through a range of about 40 micrometers (i.e., from 53 to 93 micrometers in diameter); Curve C shows the results downweb for the sheeting reported on in Curve B; and Curve D shows the results obtained either downweb or crossweb for a representative commercial embedded lens retroreflective sheeting.

The best angularity in products of the invention has so far been achieved when the microspheres are present at lower than maximum density, e.g., so as to cover less than about about 75 percent of the area of the polymeric layer into which the microspheres are embedded, and preferably about 65 percent or less of the area. Such a less-than-maximum density, and the consequent greater spacing between microspheres, allows the spacing film or layer to be pressed more deeply between the microspheres and to follow in a substantially uniform thickness a greater portion of the surface of the microspheres. However, greater retroreflective brightness is achieved by use of microspheres at greater density.

In a preferred practice of the invention the lamination of the microsphere-covered film and spacing film is performed in line, i.e., as part of a continuous process. Extrusion of the microsphere-carrying and spacing films and the operation of embedding microspheres in the film also can be part of the process. Apparatus for performing such a continuous process is schematically pictured in Figure 5. In this apparatus a film 34a is extruded through an extruder 35 onto a carrier film 34b. Microspheres 36 are embedded in the resulting composite film 34 using a heated roll 37, microsphere-supporting pan 38, vibrator 39, heated and nip rolls 40 and 41 and cold roller 42 in the same manner as described in Example 1 above. A spacing layer or film 43 is extruded onto a cushioning web 44 in the general manner described in Example 1, using nip rollers 46 and 47; and the spacing film is laminated to the microsphere-carrying film 34 using a heated roller 48, nip roller 47, and a cooling roller 49. The cushioning web is stripped away and wound in roll 50.

The use of one continuous process for extruding and laminating allows a unique opportunity to improve the process and save costs. This improvement is accomplished by measuring or viewing the retroreflectivity of the web product after lamination of the microsphere-covered film and spacing film, e.g., by beaming a light at the laminated product and measuring the retroreflectivity, generally at an incidence angle of about 5°. To the extent that reflectivity is lower than standard the operations in the process can be directly altered, e.g., by changing the thickness of the extruded spacing film to raise reflectivity to the standard level. The result is to minimize the amount of reflective sheeting manufactured with less than standard reflectivity.

The films incorporated in sheeting of the invention may be colored, e.g., through inclusion of a transparent pigment or dye, whereby the sheeting is given a desired color. Also, images may be printed on one or more of the films. When the images are printed on surfaces that are embedded within the sheeting, the images become embedded in the sheeting and are thereby improved in durability. Special reflective effects can be obtained depending on where the images are embedded and on the dimensions of lines in the image; e.g, images printed on the spacing film may become visible only during retroreflective viewing, especially if formed with narrow lines (as taught, for example, by U.S. Pat. 3,154,872).

## Claims

1. Embedded-lens retroreflective sheeting capable of being repeatedly stretched and relaxed while maintaining useful retroreflective properties comprising
a) a monolayer of transparent glass microspheres (27);
b) a sheet in which the microspheres are embedded comprising
i) a transparent polymeric spacing layer (19c) underlying the back surface of the microspheres and having a back surface that is spaced from the back surface of the microspheres and is conformed to follow the curved surfaces of the microspheres, and
ii) a transparent polymeric cover layer (10a) covering the front surface of the microspheres; and
c) a specularly reflective layer (28) coated on said conformed back surface of the spacing layer;
said transparent polymeric layers comprising elastomeric materials which allow the sheeting to be repeatedly stretched to at least 125% of its original dimensions and upon release of the stretching tension to rapidly return to substantially its original dimensions so as to reflect incident light.

2. The retroreflective sheeting of claim 1 in which the spacing layer (19c) comprises a clear thermoplastic elastomeric aliphatic polyurethane.

3. The retroreflective sheeting of claim 1 or 2 in which the cover layer (10a) comprises a clear thermoplastic elastomeric aliphatic polyurethane.

4. The retroreflective sheeting of any of claims 1-3 in which the monolayer of transparent glass microspheres (27) is embedded in the cover layer (10a), and the transparent polymeric spacing layer (19c) is a preformed layer laminated in substantially full contact to the microsphere-covered surface of the cover layer, whereby it is in contact with, and follows the curved surfaces of, the microspheres protruding from the first layer and also is in direct contact with the portions of the cover layer between the microspheres.

5. The retroreflective sheeting of claim 4 in which the microspheres (27) are embedded in the cover layer (10a) to on the average less than half their diameter but more than one-third their diameter.

6. The retroreflective sheeting of any of claims 1-5 in which the microspheres (27) cover less than 75 percent of the area of the cover layer (10a).

7. The retroreflective sheeting of any of claims 1-6 in which the microspheres (27) vary in diameter through a range equal to at least about 50 percent of the average diameter of the microspheres.

8. The retroreflective sheeting of any of claims 1-7 in which at least one of the cover (10a) and spacing (19c) layers comprises a thermoplastic polymer that exhibits a less-than-order-of- magnitude reduction in loss modulus over a 50°C-temperature interval within the softening range of the polymer.

9. A product in which the retroreflective sheeting as claimed in any of claims 1-8 is adhered to a substrate.

10. The elastomeric embedded-lens retroreflective sheeting of claim 1 comprising first and second transparent elastomeric layers, at least one of said layers being an extruded layer which, in at least one stage during manufacture of the sheeting, is at least partially amorphous and capable of thermosoftening; a monolayer of transparent glass microspheres (27) embedded in the first layer (10a) to on the average between about one-third and one-half of their diameter, with the extreme edges of the portions of the microspheres protruding from the first layer being located substantially in a common plane; and with the second polymeric layer (19c) being laminated in substantially full contact to the microsphere-covered surface of the first layer whereby it is in direct contact with, and follows the curved surfaces of, the portions of the microspheres protruding from the first layer, and also is in direct contact with the portions of the first layer between the microspheres; a specularly reflective layer (28) vapor-coated on the exposed configured surface of the second layer; and a polymeric layer (29) covering said vapor-coated layer; said retroreflective sheeting exhibiting a half-brightness angle of at least 50° on at least one axis of the sheeting; said transparent polymeric layers comprising elastomeric materials which may be repeatedly stretched and upon release of the stretching tension rapidly return to substantially their original dimensions whereupon the sheeting exhibits retroreflectivity and angularity of retroreflection nearly like that before stretching.

11. The retroreflective sheeting as claimed in any preceding claim wherein the extreme edges of the portions of the microspheres (27) which protrude from the cover layer (10a) are aligned in a substantially common plane.

## Patentansprüche

1. Retroreflektierendes Folienmaterial mit eingebetteten Linsen, das unter gleichzeitiger Bewahrung nützlicher retroreflektierender Eigenschaften wiederholt gestreckt und entspannt werden kann, umfassend:
(a) eine Monoschicht von transparenten Glasmikrokugeln (27);
(b) ein Folienmaterial, worin die Mikrokugeln eingebettet sind, umfassend:
(l) eine transparente polymere Beabstandungsschicht (19c), die unter der Rückseite der Mikrokugeln liegt und eine Oberfläche aufweist, die von der Rückseite der Mikrokugeln beabstandet ist und sich den gekrümmten Oberflächen der Mikrokugeln anpaßt; sowie
(ii) transparente polymere Deckschicht (10a), welche die Oberfläche der Mikrokugeln bedeckt; sowie
(c) eine gerichtet reflektierende Schicht (28), die auf der angepaßten Rückseite der Beabstandungsschicht aufgetragen ist;
wobei diese polymeren Schichten elastomere Materialien umfassen, die es dem Folienmaterial ermöglichen, wiederholt auf mindestens 125 Prozent ihrer ursprünglichen Abmessungen gestreckt zu werden und bei Rücknahme der Streckspannung rasch im wesentlichen ihre ursprünglichen Abmessungen wieder anzunehmen, so daß sie einfallendes Licht reflektieren.

2. Retroreflektierendes Folienmaterial nach Anspruch 1, bei welchem die Beabstandungsschicht (19c) ein durchsichtiges thermoplastisches, elastomeres, aliphatisches Polyurethan umfaßt.

3. Retroreflektierendes Folienmaterial nach Anspruch 1 oder 2, bei welchem die Deckschicht (lOa) ein durchsichtiges thermoplastisches, elastomeres, aliphatisches Polyurethan umfaßt.

4. Retroreflektierendes Folienmaterial nach Anspruch 1 bis 3, bei welchem die Monoschicht von transparenten Glasmikrokugeln (27) eingebettet ist in die Deckschicht (10a) und die transparente polymere Beabstandungsschicht (19c) eine vorgeformte Schicht ist, die weitgehend mit vollständigem Kontakt auf der mit Mikrokugeln bedeckten Oberfläche der Deckschicht auflaminiert ist, wodurch sie im Kontakt mit den gekrümmten Oberflächen der Mikrokugeln ist und sich diesen anpaßt, die aus der ersten Schicht herausragen, und die auch im direkten Kontakt ist mit den Abschnitten der Deckschicht zwischen den Mikrokugeln.

5. Retroreflektierendes Folienmaterial nach Anspruch 4, bei welchem die Mikrokugeln (27) in der Deckschicht (10a) im Mittel zu weniger als der Hälfte ihres Durchmesser, jedoch mehr als ein Drittel ihres Durchmessers, eingebettet sind.

6. Retroreflektierendes Folienmaterial nach Anspruch 1 bis 5, bei welchem die Mikrokugeln (27) weniger als 75 Prozent der Fläche der Deckschicht (10a) bedecken.

7. Retroreflektierendes Folienmaterial nach Anspruch 1 bis 6, bei welchem die Mikrokugeln (27) im Durchmesser über einen Bereich von gleich bis mindestens etwa 50 Prozent des mittleren Durchmessers der Mikrokugeln variieren.

8. Retroreflektierendes Folienmaterial nach Anspruch 1 bis 7, bei welchem mindestens eine der Deck- (10a) und Beabstandungsschichten (19c) ein thermoplastisches Polymer aufweist, das innerhalb des Erweichungsbereich des Polymers über einen Temperaturbereich von 50 °C eine Herabsetzung des Verlustmoduls um weniger als um eine Größenordnung zeigt.

9. Produkt, bei welchem das retroreflektierende Folienmaterial nach Anspruch 1 bis 8 auf ein Substrat aufgeklebt ist.

10. Elastomeres, retroreflektierendes Folienmaterial mit eingebetteten Linsen nach Anspruch 1, umfassend:
erste und zweite transparente, elastomere Schichten, von denen mindestens eine Schicht eine extrudierte Schicht ist, die mindestens in einer Stufe während der Herstellung des Folienmaterials mindestens teilweise amorph ist und zum thermoplastischen Erweichen in der Lage ist;
eine Monoschicht von transparenten Glasmikrokugeln (27), die in der ersten Schicht (10a) im Mittel zwischen etwa einem Drittel und der Hälfte ihres Durchmessers eingebettet sind, wobei die äußeren Ränder der Abschnitte der Mikrokugeln, die aus der ersten Schicht herausragen, im wesentlichen in einer gemeinsamen Ebene angeordnet sind;
und mit der zweiten polymeren Schicht (19c) auflaminiert im wesentlichen im vollständigen Kontakt mit der mit Mikrokugeln bedeckten Oberfläche der ersten Schicht, wodurch sie in direktem Kontakt mit den gekrümmten Oberflächen der Abschnitte Mikrokugeln ist und sich diesen anpaßt, die aus der ersten Schicht herausragen, und die auch im direkten Kontakt ist mit den Abschnitten der ersten Schicht zwischen den Mikrokugeln ist;
eine gerichtet reflektierende Schicht (28), die auf der exponierten konfigurierten Oberfläche der zweiten Schicht aufgedampft ist; und
eine polymere Schicht (29), welche die aufgedampfte Schicht bedeckt;
wobei das retroreflektierende Folienmaterial einen Helligkeits-Halbwinkel von mindestens 50 ° auf mindestens einer Achse des Folienmaterials hat; wobei die transparenten polymeren Schichten elastomere Materialien umfassen, die wiederholt auf mindestens 125 Prozent ihrer ursprünglichen Abmessungen gestreckt werden können und bei Rücknahme der Streckspannung rasch im wesentlichen ihre ursprünglichen Abmessungen wieder annehmen, wonach das Folienmaterial Retroreflexionsvermögen und Winkeligkeit des Retroref lexionsvermögen nahezu dem vor dem Strecken zeigt.

11. Retroreflektierendes Folienmaterial nach einem der vorgenannten Ansprüche, bei welchem die äußeren Ränder der Abschnitte der Mikrokugeln (27), die aus der Deckschicht (10a) herausragen im wesentlichen in einer gemeinsamen Ebene ausgerichtet sind.

## Revendications

1. Feuille rétroréfléchissante à lentilles noyées, qui peut être répétitivement étirée et relâchée tout en conservant des propriétés rétroréfléchissantes satisfaisantes, comprenant
(a) une monocouche de microsphères de verre transparent (27) ;
(b) une feuille dans laquelle les microsphères sont noyées, comportant
i) une couche d'espacement en polymère transparent (19c) placée sous la surface arrière des microsphères et présentant une surface arrière qui est espacée de la surface arrière des microsphères et est conformée de manière à suivre les surfaces courbes des microsphères, et
ii) une couche de couverture en polymère transparent (10a) couvrant la surface avant des microsphères ; et
(c) une couche spéculairement réfléchissante (28) appliquée sur ladite surface arrière conformée de la couche d'espacement ;
lesdites couches de polymère transparent comprenant des matières élastomères qui permettent à la feuille d'être étirée répétitivement à au moins 125% de ses dimensions initiales et, lorsqu'on relâche la force d'étirage, de revenir rapidement sensiblement à ses dimensions initiales de façon à réfléchir la lumière incidente.

2. Feuille rétroréfléchissante suivant la revendication 1, dans laquelle la couche d'espacement (19c) comprend un polyuréthane aliphatique élastomère thermoplastique transparent.

3. Feuille rétroréfléchissante suivant la revendication 1 ou 2, dans laquelle la couche de couverture (10a) comprend un polyuréthane aliphatique élastomère thermoplastique transparent.

4. Feuille rétroréfléchissante suivant une quelconque des revendications 1 à 3, dans laquelle la monocouche de microsphères en verre transparent (27) est encastrée dans la couche de couverture (10a), et la couche d'espacement en polymère transparent (19c) est une couche préformée contre-collée en contact sensiblement total à la surface couverte de microsphères de la couche de couverture, de sorte qu'elle est en contact avec les surfaces courbes et suit ces surfaces des microsphères qui font saillie par rapport à la première couche, et elle est également en contact direct avec les portions de la couche de couverture situées entre les microsphères.

5. Feuille rétroréfléchissante suivant la revendication 4, dans laquelle les microsphères (27) sont encastrées dans la couche de couverture (10a) en moyenne de moins de la moitié de leur diamètre mais de plus du tiers de leur diamètre.

6. Feuille rétroréfléchissante suivant une quelconque des revendications 1 à 5, dans laquelle les microsphères (27) couvrent moins de 75% de la surface de la couche de couverture (10a).

7. Feuille rétroréfléchissante suivant une quelconque des revendications 1 à 6, dans laquelle les microsphères (27) varient en diamètre dans une plage égale à au moins 50% environ du diamètre moyen des microsphères.

8. Feuille rétroréfléchissante suivant une quelconque des revendications 1 à 7, dans laquelle au moins une des couches de couverture (10a) et d'espacement (19c) comprend un polymère thermoplastique qui présente une réduction inférieure à un ordre de grandeur du module de perte dans un intervalle de température de 50°C à l'intérieur de la plage de ramollissement du polymère.

9. Produit dans lequel la feuille rétroréfléchissante suivant une quelconque des revendications 1 à 8 est collée à un substrat.

10. Feuille rétroréfléchissante élastomère à lentilles noyées suivant la revendication 1, comprenant une première et une deuxième couches élastomères transparentes, au moins une des dites couches étant une couche extrudée qui est, au moins à un stade pendant la fabrication de la feuille, au moins partiellement amorphe et susceptible de thermoramollissement ; une monocouche de microsphères en verre transparent (27) encastrées dans la première couche (10a) d'une quantité comprise en moyenne entre le tiers et lamoitié de leur diamètre, les bords extrêmes des portions des microsphères qui font saillie par rapport à la première couche étant situés sensiblement dans un plan commun, et la deuxième couche de polymère (19c) étant contre-collée en contact sensiblement total à la surface couverte de microsphères de la première couche de sorte qu'elle est en contact direct avec les surfaces courbes et suit ces surfaces des portions des microsphères en saillie par rapport à la première couche, et elle est aussi en contact direct avec les portions de la première couche situées entre les microsphères ; une couche spéculairement réfléchissante (28) déposée en phase vapeur sur la surface configurée visible de la deuxième couche ; et une couche de polymère (29) couvrant ladite couche déposée en phase vapeur ; ladite feuille rétroréfléchissante possédant un angle de demi-brillance d'au moins 50° sur au moins un axe de la feuille ; lesdites couches de polymère transparent comprenant des matières élastomères qui peuvent être répétitivement étirées et qui reviennent rapidement, lorsqu'on relâche la force d'étirage, sensiblement à leurs dimensions initiales de sorte que la feuille possède une rétroréflectivité et une angularité de rétroréflexion très proches des valeurs correspondantes avant étirage.

11. Feuille rétroréfléchissante suivant une quelconque des revendications précédentes,dans laquelle les bords extrêmes des portions des microsphères (27) qui font saillie par rapport à la couche de couverture (10a) sont alignés sensiblement dans un plan commun.
